# EUROPEAN PATENT APPLICATION

(11) **EP 2 192 700 A1**
(43) Date of publication of application: **02.06.2010**
(21) Application number: 09151805.0
(22) Date of filing: 30.01.2009
(51) Int. Cl.: H04B 7/14

(54) **Multi-mode relays for relay enhanced networks**

(30) Priority: 27.11.2008 EP 08170127
(71) Applicant: Nokia Siemens Networks Oy, 02610 Espoo (FI)
(72) Inventor: Kovacs, Istvan Zsolt, 9000, Aalborg (DK); Raaf, Bernhard, 82061, Neuried (DE); Redana, Simone, 81541, München (DE); Teyeb, Oumer, 9000, Aalborg (DK); Van Phan, Vinh, 90100, Oulu (FI); Wigard, Jeroen, 9270, Klarup (DK)
(74) Representative: TBK-Patent

(57) **Abstract**

It is provided an apparatus, a system, a method, and a computer program product for multi-mode relaying. Specifically, a radio base station and a relay node connectable with each other by a second out-of-band wireless link or by a link via internet in addition to an in-band link are described. The in-band link is preferably used to control the activation/deactivation of the second link.

## Description

### Field of the invention

The present invention relates to an apparatus, a system, a method, and a computer program product for multi-mode relaying.

### Background of the invention

Relay stations (RSs) or Relay Nodes (RNs) have been proposed as coverage extensions in cellular systems since several years. Apart from this main goal of coverage extension, introducing relay concepts can also help in:
- Provision of high-bit-rate coverage in high shadowing environment;
- Reducing average radio-transmission power at the User Equipment UE, thereby saving the UE's energy consumption;
- Enhancing cell capacity and effective throughput, e.g., increasing cell-edge capacity and balancing cell load;
- Enhancing overall performance and deployment cost of a radio access network RAN.

After being carefully considered in pre-standardization activities like Wireless World Initiative (WWI) / Wireless World Initiative New Radio (WINNER), relay systems are achieving the level of maturity that is needed in ongoing standardization activities. The best evidence of this maturity is the 802.16j standardization where relays are added on top of 802.16e standard. This recent development has increased the pressure to consider relays also in long term evolution (LTE) standardization. In order to keep LTE competitive it is more than probable that relay extensions to LTE are to be studied within future releases of LTE. In the 3GPP partnership project, discussions have already started regarding LTE Advanced standardization, and relaying has been proposed as one of the key candidate features, see 3^{rd} generation partnership project (3GPP), REV-080060, "Report of 3GPP TSG RAN IMT-Advanced Workshop", Apr. 2008,http://www.3gpp.org/ftp/workshop/2008-04-07 RAN IMT Advanced/Docs/REV-080060.zip.

3^{rd} generation partnership project (3GPP) is currently standardizing home eNodeBs (HeNB, also known as "femto cells", see 3GPP TR R3.020, "Home (e)Node-B: Network Aspects"). Home eNodeBs are similar to WLAN access points and will be installed in residence and office building where there is already an access to internet via wired or other wireless system. HeNBs will appear as normal eNodeBs for the UEs and the HeNBs will access the core network of the operator via the internet. Generic Access Network (GAN), also known as Unlicensed Mobile Access (UMA), is chosen by 3GPP as the way to provide the interfacing to the operator's core network through the internet.

### Summary of the invention

It is an object of the present invention to improve the prior art.

According to a first aspect of the present invention, there is provided an apparatus, comprising base station means configured to provide a radio base station functionality comprising the ability to communicate wirelessly using a protocol compatible with a first interface protocol; first interface means configured to be wirelessly operably connected with a second apparatus using the first interface protocol; at least one of a second interface means and a third interface means, wherein the second interface means is configured to be operably connected, with the second apparatus, for transmitting an information using a second interface protocol different from the first interface protocol, and the third interface means is configured to be operably connected, with a third apparatus, for alternatively transmitting the information; decision means configured to meet, based on a criteria information, a decision whether to operably connect any of the second interface means and the third interface means and to cause transmitting of a corresponding control information, wherein the decision to operably connect any of the second interface and the third interface is met only if a type information corresponds to the respective one of the second interface means and third interface means; activating means configured to cause any of the second interface means and the third interface means to be operably connected depending on the decision; wherein, when the apparatus does not comprise the third interface means, the control information is transmitted using the first interface means independent from the decision and from the presence of an operable connection of the second interface means with the second apparatus.

Modifications of the first aspect of the present invention are as follows:

In the apparatus according to the first aspect, the first interface means may be additionally configured to receive an identification of an interface protocol, and the apparatus may further comprise type setting means configured to set the type information corresponding to the second interface means and/or the third interface means when the identification is an identification corresponding to the respective one of the second interface means and/or the third interface means.

The apparatus according to the first aspect may further comprise setting means configured to set the criteria information based on at least one of a predefined information, a load related to the first interface means, a load related to the second interface means, a load related to the third interface means, a load balancing information from neighboring cells, a load information received from the second apparatus, a capacity of the connection of the first interface means, a capacity of the connection of the second interface means, a capacity of the connection of the third interface means, an earlier decision of the decision means, an information related to costs of the connection of any of the first interface means, the second interface means, and the third interface means, an information related to the energy consumption of the connection of any of the first interface means, the second interface means, and the third interface means.

The apparatus according to the first aspect may further comprise load multiplex means configured to multiplex, when at least two of the first interface means, the second interface means, and the third interface means are operably connected, a load to be communicated between the connected ones of the first interface means, the second interface means, and the third interface means based on at least one of a predefined information, a load related to the first interface means, a load related to the second interface means, a load related to the third interface means, a load balancing information from neighboring cells, a load information received from the second apparatus, a capacity of the connection of the first interface means, a capacity of the connection of the second interface means, a capacity of the connection of the third interface means, an information related to costs related to the load on the connection of any of the first interface means, the second interface means, and the third interface means, an information related to the energy consumption related to the load on the connection of any of the first interface means, the second interface means, and the third interface means; to cause at least one of the connected first interface means, the second interface means, and the third interface means to transmit a multiplex information corresponding to the load distribution; and to demultiplex a load received by the connected first interface means, the second interface means, and the third interface means.

The apparatus according to the first aspect may comprise more than one second interface means.

In the apparatus according to the first aspect, the radio base station functionality may be a NodeB functionality of a long term evolution system.

In the apparatus according to the first aspect, the second interface protocol may be based on one of a wireless interface protocol including a general packet radio service, a universal mobile telecommunications system, a high speed packet access, and a microwave based protocol.

In the apparatus according to the first aspect comprising the third interface means, an activation information may be transmitted by the third interface means when the third interface means is activated by the activating means.

According to a second aspect of the present invention, there is provided an apparatus, comprising a processor configured to provide a radio base station functionality comprising the ability to communicate wirelessly using a protocol compatible with a first interface protocol; first processor configured to be wirelessly operably connected with a second apparatus using the first interface protocol; at least one of a second processor and a third processor, wherein the second processor is configured to be operably connected, with the second apparatus, for transmitting an information using a second interface protocol different from the first interface protocol, and the third processor is configured to be operably connected, with a third apparatus, for alternatively transmitting the information; decider configured to meet, based on a criteria information, a decision whether to operably connect any of the second processor and the third processor and to cause transmitting of a corresponding control information, wherein the decision to operably connect any of the second interface and the third interface is met only if a type information corresponds to the respective one of the second processor and third processor; activator configured to cause any of the second processor and the third processor to be operably connected depending on the decision; wherein, when the apparatus does not comprise the third processor, the control information is transmitted using the first processor independent from the decision and from the presence of an operable connection of the second processor with the second apparatus.

Modifications of the second aspect of the present invention are as follows:

In the apparatus according to the second aspect, the first processor may be additionally configured to receive an identification of an interface protocol, and the apparatus may further comprise type setter configured to set the type information corresponding to the second processor and/or the third processor when the identification is an identification corresponding to the respective one of the second processor and/or the third processor.

The apparatus according to the second aspect may further comprise setter configured to set the criteria information based on at least one of a predefined information, a load related to the first processor, a load related to the second processor, a load related to the third processor, a load balancing information from neighboring cells, a load information received from the second apparatus, a capacity of the connection of the first processor, a capacity of the connection of the second processor, a capacity of the connection of the third processor, an earlier decision of the decider, an information related to costs of the connection of any of the first processor, the second processor, and the third processor, an information related to the energy consumption of the connection of any of the first processor, the second processor, and the third processor.

The apparatus according to the second aspect may further comprise load multiplexer configured to multiplex, when at least two of the first processor, the second processor, and the third processor are operably connected, a load to be communicated between the connected ones of the first processor, the second processor, and the third processor based on at least one of a predefined information, a load related to the first processor, a load related to the second processor, a load related to the third processor, a load balancing information from neighboring cells, a load information received from the second apparatus, a capacity of the connection of the first processor, a capacity of the connection of the second processor, a capacity of the connection of the third processor, an information related to costs related to the load on the connection of any of the first processor, the second processor, and the third processor, an information related to the energy consumption related to the load on the connection of any of the first processor, the second processor, and the third processor; to cause at least one of the connected first processor, the second processor, and the third processor to transmit a multiplex information corresponding to the load distribution; and to demultiplex a load received by the connected first processor, the second processor, and the third processor.

The apparatus according to the second aspect may comprise more than one second processor.

In the apparatus according to the second aspect, the radio base station functionality may be a NodeB functionality of a long term evolution system.

In the apparatus according to the second aspect, the second interface protocol may be based on one of a wireless interface protocol including a general packet radio service, a universal mobile telecommunications system, a high speed packet access, and a microwave based protocol.

In the apparatus according to the second aspect comprising the third processor, an activation information may be transmitted by the third processor when the third processor is activated by the activator.

According to a third aspect of the present invention, there is provided an apparatus, comprising first interface means configured to be wirelessly operably wirelessly connected with a second apparatus using a first interface protocol including to receive a control information; relay node means configured to provide a relay node functionality comprising the ability to communicate wirelessly using a protocol compatible with the first interface protocol including forwarding of information received by the first interface means; at least one of a second interface means and a third interface means, wherein the second interface means is configured to be operably connected with the second apparatus for receiving an information using a second interface protocol different from the first interface protocol, and the third interface means is configured to be operably connected, with a third apparatus, for alternatively receiving the information; activating means configured to cause any of the second interface means and the third interface means to be operably connected depending on the control information.

Modifications of the third aspect of the present invention may be as follows:

In the apparatus according to the third aspect, when the apparatus does not comprise the third interface means, the control information may be received by the first interface means independent from a content of the control information and from the presence of an operable connection of the second interface means or the third interface means.

In the apparatus according to the third aspect, the first interface means may be additionally configured to send an identification of the second interface means and/or the third interface means being comprised by the apparatus.

In the apparatus according to the third aspect, at least one of the first interface means, the second interface means, and the third interface means may be further configured to transmit at least one of a load measured related to the first interface protocol, a load measured related to the second interface protocol, and a load measured related to the third interface protocol.

In the apparatus according to the third aspect, at least one of the first interface means, the second interface means, and the third interface means may be further configured to receive a multiplex information; the apparatus may further comprise load multiplex means configured to de-multiplex a load received by at least two of the first interface means, the second interface means, and third interface means based on the multiplex information; and to multiplex a load to be communicated between at least two of the first interface means, the second interface means, and the third interface means based on the multiplex information.

The apparatus according to the third aspect may comprise more than one second interface means.

In the apparatus according to the third aspect, the relay node functionality may be a relay node functionality of a long term evolution system.

In the apparatus according to the third aspect, the second interface protocol may be based on one of a wireless interface protocol including a general packet radio service, a universal mobile telecommunications system, a high speed packet access, and a microwave based protocol.

According to a fourth aspect of the present invention, there is provided an apparatus, comprising first processor configured to be wirelessly operably wirelessly connected with a second apparatus using a first interface protocol including to receive a control information; processor configured to provide a relay node functionality comprising the ability to communicate wirelessly using a protocol compatible with the first interface protocol including forwarding of information received by the first processor; at least one of a second processor and a third processor, wherein the second processor is configured to be operably connected with the second apparatus for receiving an information using a second interface protocol different from the first interface protocol, and the third processor is configured to be operably connected, with a third apparatus, for alternatively receiving the information; activator configured to cause any of the second processor and the third processor to be operably connected depending on the control information.

Modifications of the fourth aspect of the present invention may be as follows:

In the apparatus according to the fourth aspect, when the apparatus does not comprise the third processor, the control information may be received by the first processor independent from a content of the control information and from the presence of an operable connection of the second processor or the third processor.

In the apparatus according to the fourth aspect, the first processor may be additionally configured to send an identification of the second processor and/or the third processor being comprised by the apparatus.

In the apparatus according to the fourth aspect, at least one of the first processor, the second processor, and the third processor may be further configured to transmit at least one of a load measured related to the first interface protocol, a load measured related to the second interface protocol, and a load measured related to the third interface protocol.

In the apparatus according to the fourth aspect, at least one of the first processor, the second processor, and the third processor may be further configured to receive a multiplex information; the apparatus may further comprise load multiplexer configured to de-multiplex a load received by at least two of the first processor, the second processor, and third processor based on the multiplex information; and to multiplex a load to be communicated between at least two of the first processor, the second processor, and the third processor based on the multiplex information.

The apparatus according to the fourth aspect may comprise more than one second processor.

In the apparatus according to the fourth aspect, the relay node functionality may be a relay node functionality of a long term evolution system.

In the apparatus according to the fourth aspect, the second interface protocol may be based on one of a wireless interface protocol including a general packet radio service, a universal mobile telecommunications system, a high speed packet access, and a microwave based protocol.

According to a fifth aspect of the present invention, there is provided an apparatus, comprising first interface means configured to be operably connected with a first apparatus via an interface protocol related to a base station according to a wireless communication standard; second interface means configured to be operably connected with a second apparatus via the internet; global access network controller means configured to provide a global access network controller functionality comprising translation of messages received from the internet into messages according to the interface protocol and vice versa; and routing means comprising a communication capability between the first interface means and the second interface means for transmitting an information received by the first interface means to the second interface means.

The apparatus according to the fifth aspect may further comprise activating means configured to cause the routing means to activate the communication capability between the first interface means and the second interface means depending on an activation information received by the first interface means.

According to a sixth aspect of the present invention, there is provided an apparatus, comprising first processor configured to be operably connected with a first apparatus via an interface protocol related to a base station according to a wireless communication standard; second processor configured to be operably connected with a second apparatus via the internet; global access network controller configured to provide a global access network controller functionality comprising translation of messages received from the internet into messages according to the interface protocol and vice versa; and routing processor comprising a communication capability between the first processor and the second processor for transmitting an information received by the first processor to the second processor.

The apparatus according to the sixth aspect may further comprise activator configured to cause the routing processor to activate the communication capability between the first processor and the second processor depending on an activation information received by the first processor.

According to a seventh aspect of the present invention, there is provided an apparatus, comprising first interface means configured to be operably connected with a first apparatus via an interface protocol related to an interface of a base station towards a core network according to a wireless communication standard; second interface means configured to be operably connected with a second apparatus via the interface protocol; gateway means configured to provide a gateway functionality between a base station according to the wireless communication standard and a core network; and routing means comprising a communication capability between the first interface means and the second interface means for transmitting an information received by the first interface means to the second interface means.

The apparatus according to the seventh aspect may further comprise activating means configured to cause the routing means to activate the communication capability between the first interface means and the second interface means depending on an activation information received by the first interface means.

According to a eighth aspect of the present invention, there is provided an apparatus, comprising first processor configured to be operably connected with a first apparatus via an interface protocol related to an interface of a base station towards a core network according to a wireless communication standard; second processor configured to be operably connected with a second apparatus via the interface protocol; gateway processor configured to provide a gateway functionality between a base station according to the wireless communication standard and a core network; and routing processor comprising a communication capability between the first processor and the second processor for transmitting an information received by the first processor to the second processor.

The apparatus according to the eighth aspect may further comprise activator configured to cause the routing processor to activate the communication capability between the first processor and the second processor depending on an activation information received by the first processor.

According to a ninth aspect of the present invention, there is provided a system, comprising a first apparatus according to the first aspect comprising the second interface means; and a second apparatus according to the third aspect comprising the second interface means; wherein the first interface means of the first apparatus and the first interface means of the second apparatus are configured to be operably connected with each other; wherein the second interface means of the first apparatus and the second interface means of the second apparatus are configured to be operably connected with each other; and wherein the control information received by the second apparatus corresponds to the control information sent by the first apparatus.

According to a tenth aspect of the present invention, there is provided a system, comprising a first apparatus according to the second aspect comprising the second processor; and a second apparatus according to the fourth aspect comprising the second processor; wherein the first processor of the first apparatus and the first processor of the second apparatus are configured to be operably connected with each other; wherein the second processor of the first apparatus and the second processor of the second apparatus are configured to be operably connected with each other; and wherein the control information received by the second apparatus corresponds to the control information sent by the first apparatus.

According to an eleventh aspect of the present invention, there is provided a system, comprising a first apparatus according to the first aspect comprising the third interface means; and a second apparatus according to the third aspect comprising the third interface means; a third apparatus according to either the fifth or the seventh aspect, wherein the first interface means of the first apparatus and is operably connected with the first interface means of the second apparatus; the third interface means of the first apparatus is operably connected with the first interface means of the third apparatus; the second interface means of the third apparatus is operably connected with the third interface means of the second apparatus via internet; and the control information received by the second apparatus corresponds to the control information sent by the first apparatus.

In the system according to the eleventh aspect the first apparatus may comprise the second interface; the second apparatus may comprise the second interface, and the second interface of the first apparatus may be operably connected with the second interface of the second apparatus.

According to a twelfth aspect of the present invention, there is provided a system, comprising a first apparatus according to the second aspect comprising the third processor; and a second apparatus according to the fourth aspect comprising the third processor; a third apparatus according to either the sixth or the eighth aspect, wherein the first processor of the first apparatus and is operably connected with the first processor of the second apparatus; the third processor of the first apparatus is operably connected with the first processor of the third apparatus; the second processor of the third apparatus is operably connected with the third processor of the second apparatus via internet; and the control information received by the second apparatus corresponds to the control information sent by the first apparatus.

In the system according to the twelfth aspect the first apparatus may comprise the second interface; the second apparatus may comprise the second interface, and the second interface of the first apparatus may be operably connected with the second interface of the second apparatus.

According to a thirteenth aspect of the present invention, there is provided a method, comprising wirelessly operably connecting a first apparatus comprising a first interface means with a second apparatus using a first interface protocol, wherein the first apparatus is configured to provide a radio base station functionality comprising the ability to communicate wirelessly using a protocol compatible with the first interface protocol; meeting a decision by the first apparatus based on a criteria information, whether the first apparatus is operably connected by a second interface means, with the second apparatus, for transmitting an information using a second interface protocol different from the first interface protocol, and/or operably connected by a third interface means, with a third apparatus, for alternatively transmitting the information, wherein the decision to operably connect using the second interface means and/or the third interface means is met only if a type information corresponds to the respective one of the second interface means and the third interface means; depending on the decision, operably connecting the first apparatus using the second interface means and the third interface means; and transmitting a control information corresponding to the decision, wherein, when the apparatus does not comprise a third interface means, the control information is transmitted using the first interface protocol independent from the decision and from the presence of an operable connection using the second interface means.

Modifications of the thirteenth aspect of the present invention may be as follows:

The method according to the thirteenth aspect may further comprise receiving an identification of an interface protocol; and setting the type information corresponding to the second interface means and/or the third interface means when the identification is corresponds to an identification of the respective one of the second interface means and/or the third interface means.

In the method according to the thirteenth aspect, the criteria information is set based on at least one of a predefined information, a load measured related to the first interface means, a load measured related to the second interface means, a load measured related to the third interface means, a load balancing information from neighboring cells, a load information received from the second apparatus, a capacity of the connection of the first interface means, a capacity of the connection of the second interface means, a capacity of the connection of the third interface means, an earlier decision, an information related to costs of any of the connection by the first interface means, the second interface means, and the third interface means, an information related to the energy consumption of the connection by any of the first interface means, the second interface means, and the third interface means.

The method according to the thirteenth aspect may further comprise multiplexing, when at least two of the first interface means, the second interface means, and the third interface means are operably connected, a load to be communicated between the connected first interface means, the second interface means, and the third interface means based on at least one of a predefined information, a load measured related to the first interface means, a load measured related to the second interface means, a load measured related to the third interface means, a load balancing information from neighboring cells, a load information received from the second apparatus, a capacity of the connection of the first interface protocol, a capacity of the connection of the second interface protocol, an information related to costs related to the load on the connection by any of the first interface means, the second interface means, and the third interface means, an information related to the energy consumption related to the load on the connection by the first interface means, the second interface means, and the third interface means; transmitting a multiplex information corresponding to the load distribution using at least one of the first interface means, the second interface means, and the third interface means; and demultiplexing a load received by the connected first interface means, second interface means, and third interface means.

According to a fourteenth aspect of the present invention, there is provided a method, comprising wirelessly operably connecting a first apparatus comprising a first processor with a second apparatus using a first interface protocol, wherein the first apparatus is configured to provide a radio base station functionality comprising the ability to communicate wirelessly using a protocol compatible with the first interface protocol; meeting a decision by the first apparatus based on a criteria information, whether the first apparatus is operably connected by a second processor, with the second apparatus, for transmitting an information using a second interface protocol different from the first interface protocol, and/or operably connected by a third processor, with a third apparatus, for alternatively transmitting the information, wherein the decision to operably connect using the second interface means and/or the third processor is met only if a type information corresponds to the respective one of the second processor and the third processor; depending on the decision, operably connecting the first apparatus using the second processor and the third processor; and transmitting a control information corresponding to the decision, wherein, when the apparatus does not comprise a third processor, the control information is transmitted using the first interface protocol independent from the decision and from the presence of an operable connection using the second processor.

Modifications of the fourteenth aspect of the present invention may be as follows:

The method according to the fourteenth aspect may further comprise receiving an identification of an interface protocol; and setting the type information corresponding to the second processor and/or the third processor when the identification is corresponds to an identification of the respective one of the second processor and/or the third processor.

In the method according to the fourteenth aspect, the criteria information is set based on at least one of a predefined information, a load measured related to the first processor, a load measured related to the second processor, a load measured related to the third processor, a load balancing information from neighboring cells, a load information received from the second apparatus, a capacity of the connection of the first processor, a capacity of the connection of the second processor, a capacity of the connection of the third processor, an earlier decision, an information related to costs of any of the connection by the first processor, the second processor, and the third processor, an information related to the energy consumption of the connection by any of the first processor, the second processor, and the third processor.

The method according to the fourteenth aspect may further comprise multiplexing, when at least two of the first processor, the second processor, and the third processor are operably connected, a load to be communicated between the connected first processor, the second processor, and the third processor based on at least one of a predefined information, a load measured related to the first processor, a load measured related to the second processor, a load measured related to the third processor, a load balancing information from neighboring cells, a load information received from the second apparatus, a capacity of the connection of the first interface protocol, a capacity of the connection of the second interface protocol, an information related to costs related to the load on the connection by any of the first processor, the second processor, and the third processor, an information related to the energy consumption related to the load on the connection by the first processor, the second processor, and the third processor; transmitting a multiplex information corresponding to the load distribution using at least one of the first processor, the second processor, and the third processor; and demultiplexing a load received by the connected first processor, second processor, and third processor.

According to a fifteenth aspect of the present invention, there is provided a method comprising operably connecting, by a first interface means, a first apparatus with a second apparatus using a first interface protocol, wherein the first apparatus is configured to provide a relay node functionality comprising the ability to communicate wirelessly using a protocol compatible with the first interface protocol; receiving by the first apparatus from the second apparatus a control information; depending on the control information, operably connecting the first apparatus by any of second interface means for receiving an information using a second interface protocol different from the first interface protocol and a third interface means for alternatively receiving the information; wherein, when the first apparatus does not comprise the third interface means, the control information is received by the first interface means independent from a content of the control information and from the presence of an operable connection with the second apparatus by the second interface means.

Modifications of the fifteenth aspect of the rpesent invention are as follows:

The method according to the fifteenth aspect may further comprise sending an identification of the second interface means and/or the third interface means being comprised by the first apparatus.

The method according to the fifteenth aspect may further comprise transmitting to the second apparatus at least one of a load measured related to the first interface means, a load measured related to the second interface means, and a load measured related to the third interface means.

The method according to the fifteenth aspect may further comprise receiving a multiplex information; de-multiplexing a load received by at least two of the first interface means, the second interface means, and the third interface means based on the multiplex information; and multiplexing a load to be communicated between the first interface means, the second interface means, and the third interface means based on the multiplex information.

According to a sixteenth aspect of the present invention, there is provided a method comprising operably connecting, by a first processor, a first apparatus with a second apparatus using a first interface protocol, wherein the first apparatus is configured to provide a relay node functionality comprising the ability to communicate wirelessly using a protocol compatible with the first interface protocol; receiving by the first apparatus from the second apparatus a control information; depending on the control information, operably connecting the first apparatus by any of second processor for receiving an information using a second interface protocol different from the first interface protocol and a third processor for alternatively receiving the information; wherein, when the first apparatus does not comprise the third processor, the control information is received by the first processor independent from a content of the control information and from the presence of an operable connection with the second apparatus by the second processor.

Modifications of the sixteenth aspect of the rpesent invention are as follows:

The method according to the sixteenth aspect may further comprise sending an identification of the second processor and/or the third processor being comprised by the first apparatus.

The method according to the sixteenth aspect may further comprise transmitting to the second apparatus at least one of a load measured related to the first processor, a load measured related to the second processor, and a load measured related to the third processor.

The method according to the sixteenth aspect may further comprise receiving a multiplex information; de-multiplexing a load received by at least two of the first processor, the second processor, and the third processor based on the multiplex information; and multiplexing a load to be communicated between the first processor, the second processor, and the third processor based on the multiplex information.

According to a seventeenth aspect of the present invention, there is provided a method, comprising operably connecting a first apparatus via an interface protocol related to a base station according to a wireless communication standard; operably connecting a second apparatus by a second interface means via the internet; and providing a global access network controller functionality comprising translation of messages received from the internet into messages according to the interface protocol and vice versa; and routing an information received by the first interface means to the second interface means.

The method according to the seventeenth aspect may further comprise activating the communication capability between the first interface means and the second interface means depending on an activation information received by the first interface means.

According to a eighteenth aspect of the present invention, there is provided a method, comprising operably connecting a first apparatus via an interface protocol related to a base station according to a wireless communication standard; operably connecting a second apparatus by a second processor via the internet; and providing a global access network controller functionality comprising translation of messages received from the internet into messages according to the interface protocol and vice versa; and routing an information received by the first processor to the second processor.

The method according to the eighteenth aspect may further comprise activating the communication capability between the first processor and the second processor depending on an activation information received by the first processor.

According to a nineteenth aspect of the present invention, there is provided a method, comprising operably connecting a first apparatus via an interface protocol related to a base station according to a wireless communication standard; operably connecting a second apparatus by a second interface via the interface protocol; and providing a gateway functionality between a base station according to the wireless communication standard and a core network; and routing an information received by the first interface means to the second interface means.

The method according to the nineteenth aspect may further comprise activating the communication capability between the first interface means and the second interface means depending on an activation information received by the first interface means.

According to a twentieth aspect of the present invention, there is provided a method, comprising operably connecting a first apparatus via an interface protocol related to a base station according to a wireless communication standard; operably connecting a second apparatus by a second interface via the interface protocol; and providing a gateway functionality between a base station according to the wireless communication standard and a core network; and routing an information received by the first processor to the second processor.

The method according to the twentieth aspect may further comprise activating the communication capability between the first processor and the second processor depending on an activation information received by the first processor.

According to a twenty-first aspect of the present invention, there is provided a computer program product embodied on a computer-readable medium, comprising program code means which perform, when run on a computer, the method according to any of the thirteenth to twentieth aspect.

Further details, features, objects, and advantages are apparent from the following detailed description of the preferred embodiments of the present invention which is to be taken in conjunction with the appended drawings, in which
Fig. 1 shows a deployment scenario of a relay enhanced radio access network with user equipment;
Fig. 2 shows interfaces a relay enhanced radio access network;
Fig. 3 shows a deployment scenario of another relay enhanced radio access network with user equipment;
Fig. 4 shows interfaces of another relay enhanced radio access network;
Fig. 5 shows interfaces of another relay enhanced radio access network; and
Fig. 6 shows a communication between a base station and a relay node.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

There are many kinds of relay systems proposed starting from the simplest one i.e. amplify/forward (applied in single frequency digital video broadcast - home (DVB-H) networks, for example) ending up to the most complex one, which utilizes a network coding to improve the overall performance. The most common relay type that is proposed for cellular relaying is a detect/forward type of relay, where an input signal is detected and retransmitted using the same procedure as in the original transmission.

From a protocol perspective, relaying can be realized at different layers of the protocol stack. A simple amplify and forward relaying can be realized at the layer 1 of the protocol stack where the relay is required to have only (some part of) the physical (PHY) layer. Layer 2 RNs, which include the protocol stack up to the medium access control (MAC)/radio link control (RLC) layers, enable the possibility of doing decentralized radio resource management. Layer 3 or higher layer RNs could almost be considered as wireless base stations and support all the protocol layers of normal base stations.

One of the main driving forces behind the deployment of relays is the low infrastructure cost. RNs are normally connected using an in-band wireless link. E.g., RNs according to a discussed Long Term Evolution-Advanced (LTE-A) standard are normally connected using in-band wireless link based on the LTE advanced air interface.

Hereinafter, the deployment of relay nodes is described with emphasis on an LTE / LTE-Advanced network. However, the invention is not limited to any of these standards but may be applied to other wireless standards such as global system for communication (GSM), general packet radio service (GPRS), Universal Mobile Telecommunications System (UMTS), wireless local access network (WLAN), WiFi (trademark of WiFi alliance, USA), etc., too.

In order to make LTE-A economically viable, it is generally preferred to be as much backward compatible with Release 8 as possible, also with respect to relaying. This is especially desirable towards the user equipment side, as it will allow users to benefit from relaying with their Release 8 terminals. Based on previous 3GPP experiences it is preferred that full backward compatibility is given towards the user equipment side, i.e. Rel'8 and LTE-A terminals may work equally well in Rel'8 and LTE-A networks.

At the network side, software and even hardware updates between standard releases may be possible but preferably they should be as small as possible. Hence, from UE viewpoint the serving network node should preferably function in exactly the same way as Rel'8 eNodeB. Due to this preference the reduction of eNodeB functionalities when defining a relay node would not be appreciated and relay nodes may preferably need to support all main eNodeB functions. Due to this fact relay nodes according to certain embodiments of the present invention are preferably capable of flexible resource sharing with an eNodeB that controls them.

Therefore, for certain embodiments of the present invention, relaying is preferably performed on layer 3 or higher.

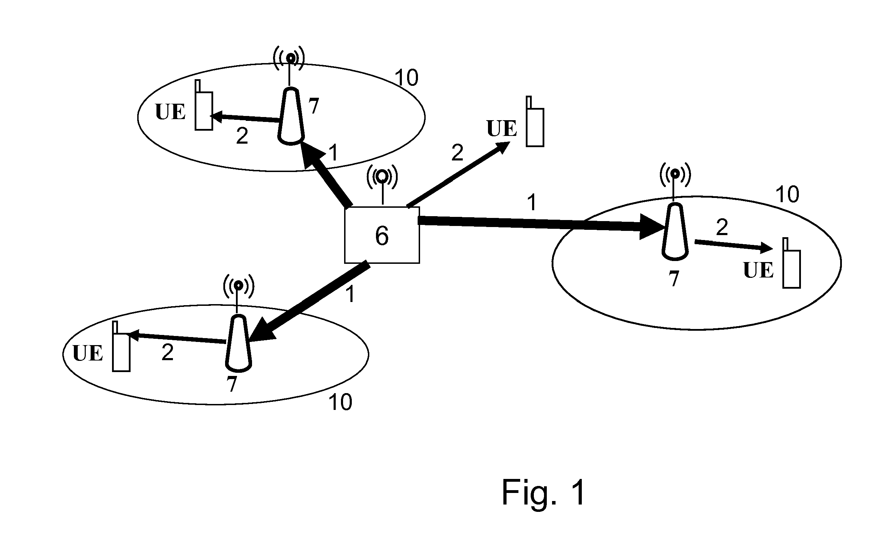

Fig. 1 illustrates a typical deployment scenario of LTE radio access network (RAN) with radio relayed extensions. In Fig. 1, a radio base station (eNodeB) is designated by 6, a relay node is designated by 7, and a user equipment by UE. 1 designates a relay link between the base station and a relay node, 2 designates an access link to a user equipment. 10 designates the coverage area of the corresponding relay node.

The base station 6 serves one or more user equipments UE via an access link 2. Furthermore, the base station is in communication with one or more relay nodes 7 via an access link 1. The access link uses an in-band wireless link based e.g. on an LTE advanced air interface standard. The relay node may be deployed e.g. to extend coverage, to increase throughput in hotspots, or to overcome excessive shadowing. E.g. the area 10 in Fig. 1 depicts a coverage area of the respective relay node.

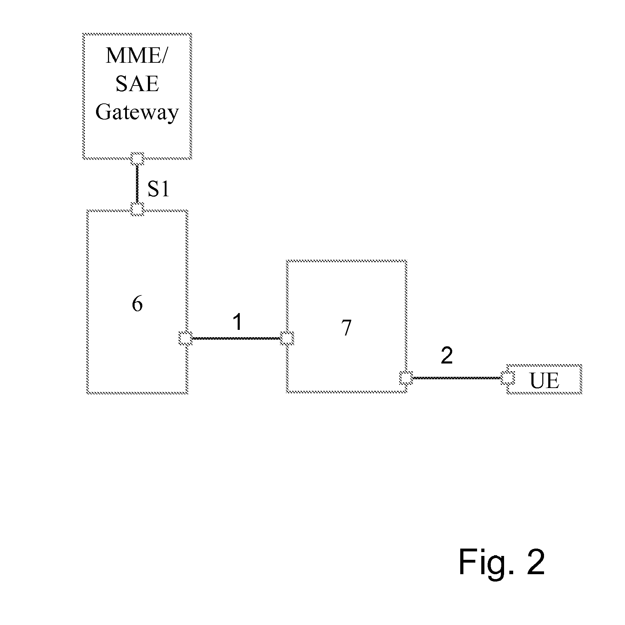

Fig. 2 shows some interfaces in a relay enhanced LTE network. As can be seen in the figure, the eNodeB 6 is connected to a core network element (e.g. Mobility Management Entity/System Architecture Evolution (MME/SAE) gateway) through the S1 interface. Furthermore, it is connected with the relay node 7 through a backhaul (relay) link 1 using the LTE-A air interface. The access link 2 between the relay node 7 and the user equipment UE is using LTE release 8 air interface for backward compatibility purposes.

The in-band wireless link consumes radio resources. Though a deployment scenario corresponding to Fig. 1 is a cheap and simple solution, there might be a need to support out-of-band wireless links (microwave, high speed packet access (HSPA), etc.) instead of the in-band wireless link. This is especially significant in scenarios/durations where the radio resources are limited and not enough resources can be reserved to the relay (backhaul) link without compromising the quality for users that are directly being served by the eNodeB (eNB). Thus, it can be beneficial to use multiple interfaces in the backhaul link. This may not only increase system performance but also add robustness to the system by switching between the interfaces, or even sharing the load between the multiple interfaces when the need arises.

The prevalence of overlay networks where base stations of multiple networks with different interfaces (e.g. GPRS, UMTS, HSPA, etc) are available at the site of the eNodeB facilitates the possibility to set up a second link between the eNodeB and a relay node on one or more of the other interfaces different from the LTE-A air interface to use them for switching, load distribution or load-sharing. As one option, the other interface is not compatible with the LTE-A interface.

According to certain embodiments of the present invention, multi-mode relay nodes and the procedures and mechanisms for enabling/disabling the different interfaces are proposed. E.g. such enabling/disabling may take place to optimize usage of radio system resources.

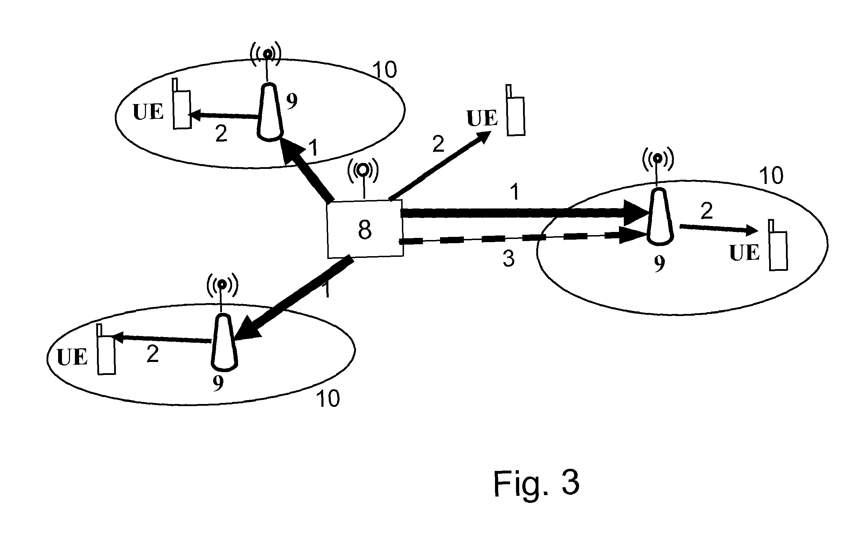

Fig. 3 illustrates a deployment scenario of LTE radio access network (RAN) with multi-mode relay nodes. In Fig. 3, a radio base station (eNodeB) is designated by reference numeral 8, a relay node is designated by reference numeral 9, and a user equipment by UE. Reference numeral 1 designates an in-band wireless relay link between the base station and a relay node, Reference numeral 2 designates an access link to a user equipment. Reference numeral 10 designates the coverage area of the corresponding relay node.

The base station 8 serves one or more user equipments UE via an access link 2. Furthermore, the base station is in communication with one or more relay nodes 9 via an access link 1. The access link 1 uses an in-band wireless link based e.g. on an LTE advanced air interface standard. The relay node 9 may be deployed e.g. to extend coverage, to increase throughput in hotspots, or to overcome excessive shadowing. E.g. the area 10 in Fig. 3 depicts a coverage area of the respective relay node.

In addition to the deployment scenario shown in Fig. 1, the deployment scenario according to Fig. 3 also comprises a second link (second relay link) 3 between the eNodeB 8 and one of the relay nodes 9. The second link 3 is based on a protocol different from the protocol of the relay link 1, i.e. different from LTE-A in the present embodiment. It may be a wireless link not compatible with LTE-A based e.g. on GSM, GPRS, HSPA, WLAN, WiFi, microwave, etc.

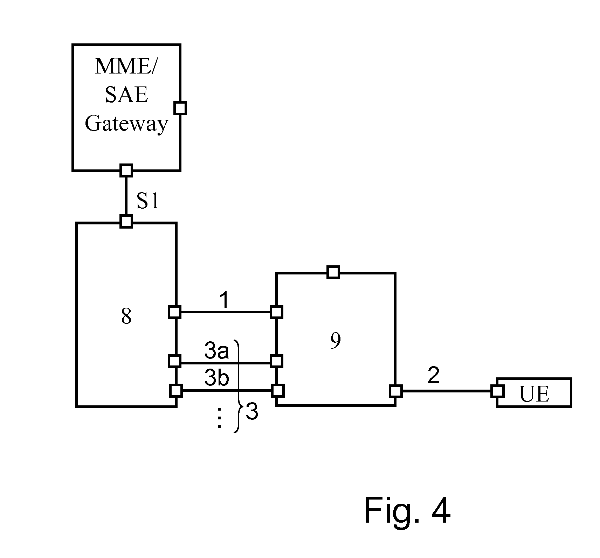

Fig. 4 shows the different interfaces in a relay enhanced LTE network with a multi-mode relay node. As can be seen in the figure, the eNodeB 8 is connected to a core network element (MME/SAE gateway) through the S1 interface. Furthermore, it is connected with the relay node 9 through a backhaul (relay) link 1 using the LTE-A air interface. The access link 2 between the relay node 7 and the user equipment UE is preferably using LTE release 8 air interface for backward compatibility purposes.

In addition to the links shown in Fig. 2, Fig. 4 shows a new system architecture comprising second links 3 between the eNodeB 8 and the relay node 9. In the Figure, two second links 3a, 3b are shown, but the number may be any positive number.

For an operation of this embodiment, the following procedures are proposed:
1. Identification of a supported second interface;
2. Activation of a second interface;
3. Deactivation of a second interface;
4. Selection of an interface to use;
5. Selection of multiple interfaces at once for load-balancing purposes.

In particular, the third to fifth procedures are not mandatory for the embodiment to work but are regarded as favorable for optimum performance of the system.

The following sections describe these different procedures in detail.

### (1) Identification of supported interfaces

When a RN is powered on, it has to be associated with an eNodeB (eNBr, also known as "mother eNodeB") before it can become fully operational. This is because it is not yet connected to the core network side and a relaying UE connection is feasible only through the mother eNodeB.

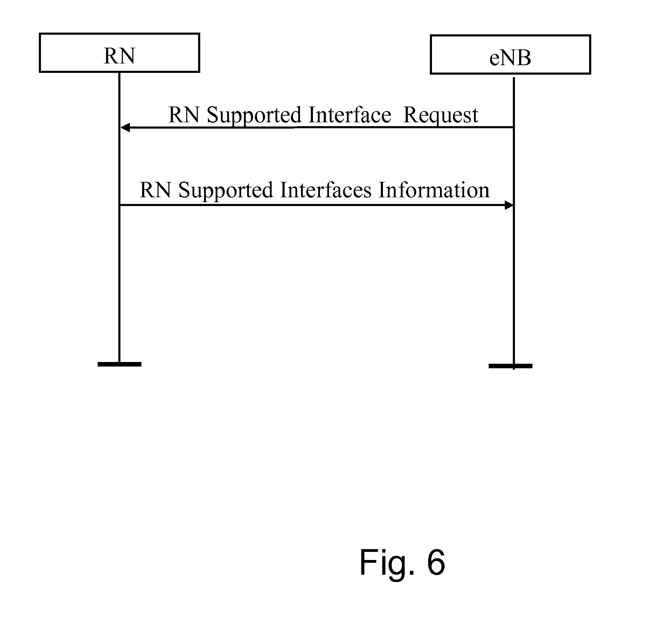

It is necessary for the eNodeBs to know the interfacing options available at a relay node (RN). When the association with the mother eNB is complete, the mother eNB can start a new radio resource control (RRC) procedure, as shown in Figure 6. The mother eNB sends a "Supported Interfaces request" message to the RN, and the RN responds with a "Supported Interfaces Information" message, which contains detailed information about the RN's supported interfaces. Note that this RRC procedure has to be conducted via the LTE-A air interface as that is the original interface used when the RN is associated with a mother eNB.

If the relay node is a single-mode relay node, i.e. a relay node without a second interface for the relay link, the "Supported interfaces request" will be ignored by the single mode RNs, as it may be not aware of this procedure. Thus, if the mother eNB receives no response after a certain timeout period, it will assume the RN being a single mode RN. Thus, a multi-mode RN may coexist with a single (LTE-A) mode RN at the same mother eNB.

Another possibility is to make the exchange of supported interface information part of the mother eNB-RN association procedure. That is, multi-mode RNs can include the information regarding their supported interfaces in the "association confirm/complete" message they send to the mother eNB.

Still another option would be directly inputting the information about the supported interfaces at the mother eNB when installing the relay node. E.g., a network planning tool or a human operator can input the information into the database or another storage of the mother eNB.

It is favorable that the mother eNB is aware of all supported second interfaces. However, it is also possible that the mother eNB knows only about a subset of the supported second interfaces.

### (2) Activation of a second interface

Once a second interface is known to the mother eNB, it may be activated if the mother eNB supports the protocol of the second interface.

Several criteria can be used for a decision to activate a second interface:
- Select the interface that belongs to the network with the lowest load;
- Select the interface that belongs to the network that can provide the highest capacity for the relay link;
- Select the interface that is the cheapest, from the operators OPEX point of view; for example, whether using microwave or not can depend on this criterion;
- Selection of the network which optimizes certain resources like energy.

Also, load balancing information from neighboring cells may be taken into account. A combination of several of the criteria mentioned above could also be used in the decision process.

The relay node may support the decision process by providing some load data to the mother eNB, preferably via the LTE-A interface.

Alternatively, a second interface may be always activated when it is known to the mother eNB.

The decision to activate a second interface is communicated to the RN via the in-band (LTE-A) air interface. Then, the RN activates his corresponding second interface and the second link is established.

In some embodiments, more than one second link may be activated.

Reactivation of a link is done in the same way as activation of a link.

### (3) Deactivation of second interfaces

For optimum system performance, there may be a need to deactivate the currently active second interface and also to activate or reactivate another second interface. If after a de-activation no second interface is still activated, any subsequent communication is performed via the in-band link, i.e. the LTE-A link, that is preferably always active.

The decision to deactivate an interface (and maybe to activate another second interface) is done in a similar fashion as in the case of the interface activation procedure described in section (2), i.e. based on e.g. load, throughput, cost factors or other reasons.

This decision is communicated to the RN preferably via the LTE-A air interface and the RN deactivates the current interface. In addition, depending on the decision, the RN and the eNB may activate or reactivate a new second interface and establish a new second link.

Several conditions should be fulfilled when a second interface is deactivated in order to make sure that no user data is lost and no active bearer that belongs to a UE connected to the relay node is disconnected:
(a) Adequate resources have to be allocated in the new network that is going to be accessed via the new second interface before the interface modification could be made to ensure that the Quality of Service (QoS) of active bearers will still be satisfied;
(b) The relayed UEs should not get aware of the interface changes;
(c) Any outstanding data in the old second interface should be forwarded to the new interface, both in the mother eNB and RN, before the old second interface is deactivated.

If the conditions (a) to (c) are not fulfilled, the activation/deactivation of the second interface may still be performed. However, in this case the communication of the user equipment may be spoiled by this procedure. E.g. some data or a call may be lost.

### (4) Selection of second interface

As mentioned above, the LTE-A air interface is the default interface to be used between the mother eNB and the RN. However, once at least one second link is activated, the interface to be used can be selected for a communication between mother eNB and RN. However, control information of the multi-mode operation of the RN, i.e. the activation/deactivation of a second link is preferably sent via the LTE-A air interface.

The LTE-A air interface may always be active even when the selected interface is another one, as it is preferred for signaling to control the multi-mode operation of the RN.

The decision to use a specific relay interface is done in a similar fashion as in the case of the interface activation procedure described in section (2), i.e. based on e.g. load, throughput, cost factors or other reasons. The interface selection is controlled by the mother eNB. This selection may be communicated to the RN via the LTE-A air interface.

The usage of a second interface may also be predefined for a case when the second interface is activated.

Then, the mother eNB and the RN use the defined second interface for the communication.

The selection may be valid for all communication (preferably except the multi-mode control operation), or only for certain communications, e.g. depending on the amount or type of data to be transmitted, a user, a user equipment etc.

### (5) Selection of multiple second interfaces

The interface selection feature described in section (4) above may be extended to support load balancing, i.e. the old interface will not be deactivated and will still be selected for some of the UEs or bearers. The load balancing procedure is important in cases where the available resources in one network are not enough for the backhaul link and some of the connections have to be transferred to another network.

Two main reasons for selecting multiple interfaces are:
- A new bearer is to be established by a relayed UE and there are not enough resources for the backhaul link for this connection; or
- A new bearer is to be established by a UE connected directly with the mother eNodeB, but there are not enough radio resources, unless some resource being used for the backhaul link is freed.

In the first case, the new bearer may be associated with the newly selected second interface and the rest of the bearers may be not affected.

In the second case, the mother eNB may select a bearer or even bearers being used for the relayed link which may be transferred to a second interface, so that the bearer can be admitted additionally to the cell.

Measures may be taken on the data of the selected bearers in order to avoid user data loss and dropped bearers.

Thus, the backhaul relaying interface between a multi-mode RN and a corresponding eNB may be provided simultaneously by more than one radio link, regardless of the radio access technologies used to implement each radio link; and the setup and utilization of at least one activated radio link for relaying may be for the aforementioned load balancing purposes, controlled and coordinated by the eNB.

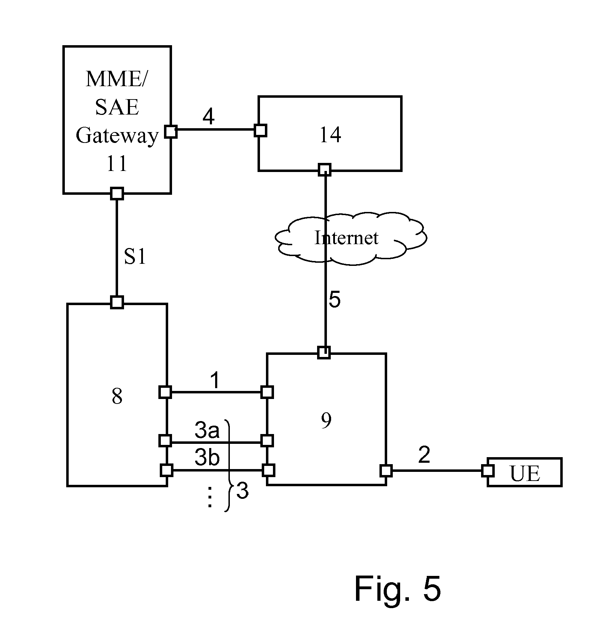

Another embodiment of the present invention is shown in Fig. 5. In this embodiment the capabilities of a home eNodeB (HeNB) and a multi-mode RN are integrated for providing quality services for the end user, while at the same time optimizing the usage of the radio system resources.

Though HeNBs seem to be an attractive solution for non real time (NRT) services, there might be some real time (RT) services that have very stringy requirements that might not be met via the highly unpredictable internet connection to the core network.

The embodiment shown in Fig. 5 builds is based on a holistic approach to integrate home eNB and multi-mode RN capability.

The embodiment shown in Fig. 5 corresponds to that of Fig. 4 but comprises additionally a GAN controller 14 connected with the relay node 9 through link 5, and with the MME/SAE gateway 11 via link 4. The GAN controller 14 may be integrated with the MME/SAE gateway 11 or may be a separate entity. Link 5 is established via the internet, either through a wired connection like DSL/cable or a wireless link like WLAN. The connection between the gateway 11 and the relay node 9 through links 4 and 5 via the internet is designated as S1_{RN} link.

The GAN controller 14 translates the messages to and from the relay node 9 such that they appear, at the gateway 11, to be coming from another base station connected to the gateway.

The eNodeB 8 is connected to the MME/SAE gateway 11 via the S1 link. Thus, a connection may be established between the eNodeB 8 and the relay node 9 through the gateway 11, the GAN controller 14 and the internet, using the S1_{RN} link.

The connection between the eNodeB 8 and the relay node 9 may be used in the same way as the second connections 3a, 3b,... of the embodiment shown in Fig. 4. I.e., for an operation of this embodiment, the following procedures corresponding to those of the embodiment according to Fig. 4 may be established:
1. Identification of a supported second interface and/or the presence of an interface via internet;
2. Activation of a second interface and/or the interface via internet;
3. Deactivation of a second interface and/or the interface via internet;
4. Selection of an activated interface to use;
5. Selection of multiple activated interfaces at once for load-balancing purposes.

In particular, the third to fifth procedures are not mandatory for the embodiment to work but are regarded as favorable for optimum performance of the system.

The details to these procedures correspond to those described with respect to the previous embodiment where the second interface is replaced by any of the second interface and the interface via the internet.

In addition, in this embodiment, the LTE-A air interface 1 may be deactivated when a second link or a link via the internet between the mother eNodeB and the relay node is established. In this case the at least one remaining link must carry the control information, too.

A relay node according to this embodiment with access to the internet may operate in several modes:
1. It can use the link via internet as an alternative interface to the LTE-Advanced interface, i.e. the data for the relayed users will be routed from the eNB to the RN via the core network (gateway 11 / GAN controller 14) and the internet and the RN forwards it to the relayed UEs via the LTE air interface (and vice versa for uplink traffic).
2. It can use the link via the internet for load sharing where some of the bearers will be supplied via the internet as in case 1, and the rest are provided by LTE-Advanced interface 1 and/or the other direct interfaces 1, 3a, 3b,... between the eNodeB 8 and the relay node 9 in the backhaul.
3. It can operate as a stand alone home eNBs where the RN is directly connected via the S1RN interface to the core network (gateway 11).

The first two modes require that the system has to be configured to support connection to the operator's network via the internet and a modification in the gateway in order to route the data back and forth via the eNodeB.

The third option is basically the same as a home eNB operation. The mother eNodeB station may not be concerned with the data for the relayed UEs as they are transported directly to the gateway 11 without the need to reach the mother eNodeB 8.

However, it is still beneficial to maintain a direct connection between the mother eNB and the RN in order to enable the RN switch its mode back to "normal relay node" when enough radio resources become available for the direct link between relay node and mother eNodeB in the backhaul. Such a maintained direct connection uses very few radio resources. One reason for such a shift from home eNB operation to relay node operation may be internet congestion.

As outlined with respect to the embodiment of Fig. 4, some front-end functionality is required to support a hybrid multi-mode relay node and home eNB operation, when direct links are established between the relay node and the mother eNodeB, comprising:
- Connection control and coordination of simultaneous multi-mode radio links or interfaces between RN and eNB for relaying;
- Relayed traffic distribution and encapsulation to/from simultaneous multi-mode links;
- The decision to route which packet (or simply all the packets belonging to a given bearer) on which interface.

In addition, some new functionality across RN-Gateway-eNB is needed to support the S1_{RN} interface as an alternative to or in parallel with the direct multi-mode relaying interfaces, the main one being the re-sequencing of data that is arriving via the different paths at the eNB, the RN, and optionally at the gateway.

One possibility of load sharing using the home eNodeB mode is to use the direct backhaul connections for real time (RT) services with very stringiest Quality of Service (QoS) requirements while using the internet for non-real time (NRT) services and for real time services with more relaxed QoS requirements. This is because the operator has full control over the different (wireless) networks available for the backhaul link, but not on the Internet. Another reason for this split of RT and NRT traffic is that notable latency may be expected due to the longer path needed for the packets if the RN is using the S1_{RN} link via the internet. For example the path according to mode 1 and 2 will be UE-RN-GAN-gateway-eNB-gateway.

Another possibility to use the direct links and the link via internet simultaneously is to separate control and user plane data. For example, control plane data can be sent over a direct link while user plane can be sent over the internet link. However, due to the different timing of the data paths of the direct links and the internet link, new functionalities at the core network and eNB are required to "synchronize" the control and user plane data. E.g., a time stamping mechanism may be provided, through which it is possible to identify the sequence in which data (both control and user plane) are sent.

Yet another possibility is to separate the control signaling for managing/controlling the RN, from the control and data signaling that is intended for the UE. For example, the RN control data can be sent via the direct links, while the control and user data fro the UE can be relayed via the internet links.

In the gateway, a routing capability needs to be established for routing data from the eNodeB intended for the relay node via the GAN controller and the internet to the relay node and vice versa.

It is favorable if this routing capability can be switched off when the relay node acts as a home eNodeB in order not to forward the data unnecessarily from the gateway to the mother eNodeB and back. The switching on/off of the routing capability may be controlled by the mother eNodeB: when the S1_{RN} link is (de-)activated, it may send a corresponding (de-)activation signal to the gateway. When the routing capability is switched off, the path is UE-home eNB-GAN-gateway, i.e. significantly shorter than for modes 1 and 2.

The second links 3a, 3b,... shown in Figs. 4 are present in this embodiment, too, but other embodiments comprising the GAN controller 14 may not comprise the second links 3a, 3b,.... In this case, the same procedures as described with respect to the embodiment of Fig. 5 apply to the link via internet only.

In another embodiment, the GAN controller may be directly connected with the eNodeB. In this case, a communication path is UE - relay node - GAN controller - mother eNodeB - gateway. While the load of the gateway is reduced compared to the embodiment of Fig. 5, an additional link between the GAN controller and the eNodeB is required. This link may rely on the same protocol as that between eNodeB and gateway.

The relay nodes according to this invention may be obtained by upgrading existing relay nodes. Alternatively, home eNodeBs may also be upgraded to achieve the relaying functionality as outlined herein.

The deployment of multi-mode RNs will not only make the system more flexible by creating alternatives for load sharing and load switching, it also make the system more robust to failures. That is, when the radio resources in one of the networks supported by the backhaul link are exhausted, there is still a way to transfer the load to the other networks or the internet, without dropping already ongoing bearers.

The deployment of multi-mode RNs according to some embodiments may be completely transparent to the UEs, and as such release 8 UEs will benefit from it. However changes are required in the RN, the eNBs, and the gateway or the GAN controller. The most significant change is the switching on and off of the interfaces and handling the data that belong to already ongoing bearers.
However, as mentioned above, such compatibility towards the UEs is not mandatory for certain embodiments of the invention.

According to the present embodiment there is a maximum of two hops in the system (eNB-UE or eNB-RN-UE). Furthermore, there are no connections between relay nodes, i.e. the relay node network has tree topology.

These two restrictions are used to simplify the embodiment but it is emphasized that embodiments with more than two hops and/or other network topologies are also within the scope of the invention.

The LTE-A air interface according to some embodiments according to the invention may be a logical interface. For example, if relaying is based on layer 3 or above, the information to be transmitted via the LTE-A air interface may be physically transmitted using a second and/or third interface.

The deployment of an apparatus, system, method and computer program product, respectively, according to any of these embodiments of the invention will not only make a relayed system more flexible by creating alternatives for load sharing and load switching, it also makes the system more robust to failures. That is, when the radio resources in one of the networks supported by the second link (backhaul link) are exhausted, there is still a way to transfer the load to the other networks, or even to an internet connection of the core network.

According to certain embodiments of the present invention as described above, there is provided an apparatus, a system, a method, and a computer program product for multi-mode relaying. Specifically, a radio base station and a relay node connectable with each other by a second out-of-band wireless link or by a link via internet in addition to an in-band link are described. The in-band link is preferably used to control the activation/deactivation of the second link.

The blocks, apparatuses, systems, techniques or methods described herein may be implemented in, as non-limiting examples, hardware, software, firmware, special purpose circuits or logic, general purpose hardware or controller or other computing devices, or some combination thereof.

That is, it is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus (8), comprising
base station means configured to provide a radio base station functionality comprising the ability to communicate wirelessly using a protocol compatible with a first interface protocol;
first interface means configured to be wirelessly operably connected with a second apparatus (9) using the first interface protocol;
at least one of a second interface means and a third interface means, wherein
the second interface means is configured to be operably connected, with the second apparatus (9), for transmitting an information using a second interface protocol different from the first interface protocol, and
the third interface means is configured to be operably connected, with a third apparatus (11), for alternatively transmitting the information;
decision means configured to meet, based on a criteria information, a decision whether to operably connect any of the second interface means and the third interface means and to cause transmitting of a corresponding control information, wherein the decision to operably connect any of the second interface and the third interface is met only if a type information corresponds to the respective one of the second interface means and third interface means;
activating means configured to cause any of the second interface means and the third interface means to be operably connected depending on the decision;
wherein, when the apparatus does not comprise the third interface means, the control information is transmitted using the first interface means independent from the decision and from the presence of an operable connection of the second interface means with the second apparatus.

2. The apparatus according to claim 1, wherein
the first interface means is additionally configured to receive an identification of an interface protocol, and
wherein the apparatus further comprises
type setting means configured to set the type information corresponding to the second interface means and/or the third interface means when the identification is an identification corresponding to the respective one of the second interface means and/or the third interface means.

3. The apparatus according to any of claim 1 and 2, further comprising
setting means configured to set the criteria information based on at least one of a predefined information, a load related to the first interface means, a load related to the second interface means, a load related to the third interface means, a load balancing information from neighboring cells, a load information received from the second apparatus, a capacity of the connection of the first interface means, a capacity of the connection of the second interface means, a capacity of the connection of the third interface means, an earlier decision of the decision means, an information related to costs of the connection of any of the first interface means, the second interface means, and the third interface means, an information related to the energy consumption of the connection of any of the first interface means, the second interface means, and the third interface means.

4. The apparatus according to any of claims 1 to 3, further comprising
load multiplex means configured
to multiplex, when at least two of the first interface means, the second interface means, and the third interface means are operably connected, a load to be communicated between the connected ones of the first interface means, the second interface means, and the third interface means based on at least one of a predefined information, a load related to the first interface means, a load related to the second interface means, a load related to the third interface means, a load balancing information from neighboring cells, a load information received from the second apparatus, a capacity of the connection of the first interface means, a capacity of the connection of the second interface means, a capacity of the connection of the third interface means, an information related to costs related to the load on the connection of any of the first interface means, the second interface means, and the third interface means, an information related to the energy consumption related to the load on the connection of any of the first interface means, the second interface means, and the third interface means;
to cause at least one of the connected first interface means, the second interface means, and the third interface means to transmit a multiplex information corresponding to the load distribution; and
to demultiplex a load received by the connected first interface means, the second interface means, and the third interface means.

5. The apparatus according to any of claims 1 to 4 comprising more than one second interface means.

6. The apparatus according to any of claims 1 to 5, wherein the radio base station functionality is a NodeB functionality of a long term evolution system.

7. The apparatus according to any of claims 1 to 6, wherein the second interface protocol is based on one of a wireless interface protocol including a general packet radio service, a universal mobile telecommunications system, a high speed packet access, and a microwave based protocol.

8. The apparatus according to any of claims 1 to 7 comprising the third interface means, wherein an activation information is transmitted by the third interface means when the third interface means is activated by the activating means.

9. Apparatus (9), comprising
first interface means configured to be wirelessly operably wirelessly connected with a second apparatus (8) using a first interface protocol including to receive a control information;
relay node means configured to provide a relay node functionality comprising the ability to communicate wirelessly using a protocol compatible with the first interface protocol including forwarding of information received by the first interface means;
at least one of a second interface means and a third interface means, wherein
the second interface means is configured to be operably connected with the second apparatus (8) for receiving an information using a second interface protocol different from the first interface protocol, and
the third interface means is configured to be operably connected, with a third apparatus (11), for alternatively receiving the information;
activating means configured to cause any of the second interface means and the third interface means to be operably connected depending on the control information.

10. The apparatus according to claim 9,
wherein, when the apparatus does not comprise the third interface means, the control information is received by the first interface means independent from a content of the control information and from the presence of an operable connection of the second interface means or the third interface means.

11. The apparatus according to any of claims 9 and 10,
wherein
the first interface means is additionally configured to send an identification of the second interface means and/or the third interface means being comprised by the apparatus.

12. The apparatus according to any of claims 9 to 11,
wherein at least one of the first interface means, the second interface means, and the third interface means is further configured to transmit at least one of a load measured related to the first interface protocol, a load measured related to the second interface protocol, and a load measured related to the third interface protocol.

13. The apparatus according to any of claims 9 to 12,
wherein at least one of the first interface means, the second interface means, and the third interface means is further configured to receive a multiplex information; the apparatus further comprising
load multiplex means configured to
de-multiplex a load received by at least two of the first interface means, the second interface means, and third interface means based on the multiplex information; and to
multiplex a load to be communicated between at least two of the first interface means, the second interface means, and the third interface means based on the multiplex information.

14. The apparatus according to any of claims 9 to 13, comprising more than one second interface means.

15. The apparatus according to any of claims 9 to 14,
wherein the relay node functionality is a relay node functionality of a long term evolution system.

16. The apparatus according to any of claims 9 to 15,
wherein the second interface protocol is based on one of a wireless interface protocol including a general packet radio service, a universal mobile telecommunications system, a high speed packet access, and a microwave based protocol.

17. Apparatus (14), comprising
first interface means configured to be operably connected with a first apparatus (8) via an interface protocol related to a base station according to a wireless communication standard;
second interface means configured to be operably connected with a second apparatus (9) via the internet;
global access network controller means configured to provide a global access network controller functionality comprising translation of messages received from the internet into messages according to the interface protocol and vice versa; and
routing means comprising a communication capability between the first interface means and the second interface means for transmitting an information received by the first interface means to the second interface means.

18. An apparatus according to claim 17, further comprising
activating means configured to cause the routing means to activate the communication capability between the first interface means and the second interface means depending on an activation information received by the first interface means.

19. Apparatus (11), comprising
first interface means configured to be operably connected with a first apparatus (8) via an interface protocol related to an interface of a base station towards a core network according to a wireless communication standard;
second interface means configured to be operably connected with a second apparatus (14) via the interface protocol;
gateway means configured to provide a gateway functionality between a base station according to the wireless communication standard and a core network; and
routing means comprising a communication capability between the first interface means and the second interface means for transmitting an information received by the first interface means to the second interface means.

20. An apparatus according to claim 19, further comprising
activating means configured to cause the routing means to activate the communication capability between the first interface means and the second interface means depending on an activation information received by the first interface means.

21. A system, comprising
a first apparatus (8) according to any of claims 1 to 7 comprising the second interface means; and
a second apparatus (9) according to any of claims 8 to 14 comprising the second interface means;
wherein the first interface means of the first apparatus and the first interface means of the second apparatus are configured to be operably connected with each other;
wherein the second interface means of the first apparatus and the second interface means of the second apparatus are configured to be operably connected with each other; and
wherein the control information received by the second apparatus corresponds to the control information sent by the first apparatus.

22. A system, comprising
a first apparatus (8) according to any of claims 1 to 7 comprising the third interface means; and
a second apparatus (9) according to any of claims 8 to 14 comprising the third interface means;
a third apparatus (11, 14) according to either claims 17 and 18 or to claims 19 and 20, wherein
the first interface means of the first apparatus and is operably connected with the first interface means of the second apparatus;
the third interface means of the first apparatus is operably connected with the first interface means of the third apparatus;
the second interface means of the third apparatus is operably connected with the third interface means of the second apparatus via internet; and
the control information received by the second apparatus corresponds to the control information sent by the first apparatus.

23. A system according to claim 22, wherein
the first apparatus comprises the second interface;
the second apparatus comprises the second interface, and wherein
the second interface of the first apparatus is operably connected with the second interface of the second apparatus.

24. A method, comprising wirelessly operably connecting a first apparatus (8) comprising a first interface means with a second apparatus (9) using a first interface protocol, wherein the first apparatus is configured to provide a radio base station functionality comprising the ability to communicate wirelessly using a protocol compatible with the first interface protocol; meeting a decision by the first apparatus based on a criteria information, whether the first apparatus is operably connected by a second interface means, with the second apparatus, for transmitting an information using a second interface protocol different from the first interface protocol, and/or operably connected by a third interface means, with a third apparatus, for alternatively transmitting the information, wherein the decision to operably connect using the second interface means and/or the third interface means is met only if a type information corresponds to the respective one of the second interface means and the third interface means; depending on the decision, operably connecting the first apparatus using the second interface means and the third interface means; and transmitting a control information corresponding to the decision, wherein,
when the apparatus does not comprise a third interface means, the control information is transmitted using the first interface protocol independent from the decision and from the presence of an operable connection using the second interface means.

25. The method according to claim 24, further comprising
receiving an identification of an interface protocol; and
setting the type information corresponding to the second interface means and/or the third interface means when the identification is corresponds to an identification of the respective one of the second interface means and/or the third interface means.

26. The method according to any of claims 24 and 25,
wherein the criteria information is set based on at least one of a predefined information, a load measured related to the first interface means, a load measured related to the second interface means, a load measured related to the third interface means, a load balancing information from neighboring cells, a load information received from the second apparatus, a capacity of the connection of the first interface means, a capacity of the connection of the second interface means, a capacity of the connection of the third interface means, an earlier decision, an information related to costs of any of the connection by the first interface means, the second interface means, and the third interface means, an information related to the energy consumption of the connection by any of the first interface means, the second interface means, and the third interface means.

27. The method according to any of claims 24 to 26, further comprising
multiplexing, when at least two of the first interface means, the second interface means, and the third interface means are operably connected, a load to be communicated between the connected first interface means, the second interface means, and the third interface means based on at least one of a predefined information, a load measured related to the first interface means, a load measured related to the second interface means, a load measured related to the third interface means, a load balancing information from neighboring cells, a load information received from the second apparatus, a capacity of the connection of the first interface protocol, a capacity of the connection of the second interface protocol, an information related to costs related to the load on the connection by any of the first interface means, the second interface means, and the third interface means, an information related to the energy consumption related to the load on the connection by the first interface means, the second interface means, and the third interface means;
transmitting a multiplex information corresponding to the load distribution using at least one of the first interface means, the second interface means, and the third interface means; and
demultiplexing a load received by the connected first interface means, second interface means, and third interface means.

28. A method comprising
operably connecting, by a first interface means, a first apparatus (9) with a second apparatus (8) using a first interface protocol, wherein the first apparatus is configured to provide a relay node functionality comprising the ability to communicate wirelessly using a protocol compatible with the first interface protocol;
receiving by the first apparatus from the second apparatus a control information;
depending on the control information, operably connecting the first apparatus by any of second interface means for receiving an information using a second interface protocol different from the first interface protocol and a third interface means for alternatively receiving the information;
wherein, when the first apparatus does not comprise the third interface means, the control information is received by the first interface means independent from a content of the control information and from the presence of an operable connection with the second apparatus by the second interface means.

29. The method according to claim 28, further comprising
sending an identification of the second interface means and/or the third interface means being comprised by the first apparatus.

30. The method according to any of claims 28 and 29, further comprising
transmitting to the second apparatus at least one of a load measured related to the first interface means, a load measured related to the second interface means, and a load measured related to the third interface means.

31. The method according to any of claims 28 to 30, further comprising
receiving a multiplex information;
de-multiplexing a load received by at least two of the first interface means, the second interface means, and the third interface means based on the multiplex information; and
multiplexing a load to be communicated between the first interface means, the second interface means, and the third interface means based on the multiplex information.

32. A method, comprising operably connecting a first apparatus via an interface protocol related to a base station according to a wireless communication standard;
operably connecting a second apparatus by a second interface means via the internet; and
providing a global access network controller functionality comprising translation of messages received from the internet into messages according to the interface protocol and vice versa; and
routing an information received by the first interface means to the second interface means.

33. The method according to claim 32, further comprising
activating the communication capability between the first interface means and the second interface means depending on an activation information received by the first interface means.

34. A method, comprising operably connecting a first apparatus via an interface protocol related to a base station according to a wireless communication standard;
operably connecting a second apparatus by a second interface via the interface protocol; and
providing a gateway functionality between a base station according to the wireless communication standard and a core network; and
routing an information received by the first interface means to the second interface means.

35. The method according to claim 34, further comprising
activating the communication capability between the first interface means and the second interface means depending on an activation information received by the first interface means.

36. A computer program product embodied on a computer-readable medium, comprising program code means which perform, when run on a computer, the method according to any of claims 24 to 35.
